# EUROPEAN PATENT SPECIFICATION

(11) **EP 2 908 033 B1**
(45) Date of publication and mention of the grant of the patent: **04.09.2019**
(21) Application number: 14155618.3
(22) Date of filing: 18.02.2014
(51) Int. Cl.: F16J 1/16, F16C 9/04, F16J 7/00, F16C 7/02

(54) **Connecting rod**
Pleuelstange
Tige de connexion

(43) Date of publication of application: 19.08.2015
(73) Proprietor: Caterpillar Energy Solutions GmbH, 68167 Mannheim (DE)
(72) Inventor: Stellwagen, Karl, 67227 Frankenthal (DE)
(74) Representative: BRP Renaud & Partner mbB Rechtsanwälte Patentanwälte Steuerberater

(56) References cited:
- EP-A1- 0 773 375
- EP-A1- 1 612 434
- EP-A2- 1 167 737
- WO-A1-2010/081456
- WO-A2-2006/061012
- DE-A1- 4 133 586

## Description

### Technical Field

The present disclosure generally relates to internal combustion engines, and more particularly to a connecting rod for connecting a piston via a piston pin to a crankshaft.

### Background

Internal combustion engines include a plurality of cylinders in which a respective piston is reciprocatingly arranged. To reciprocate between a top dead center (TDC) and a bottom dead center (BDC) within a cylinder, a piston is connected to a connecting rod via a piston pin. Typically, outer sections of the piston pin are mounted in piston bosses at a piston skirt of the piston. An intermediate section of the piston pin is mounted in a piston pin bore extending through a small end of the connecting rod.

During combustion strokes, the piston is subject to a high combustion pressure resulting from ignition and combustion of a pressurized air fuel mixture in the cylinder. That high combustion pressure accelerates the piston in direction of BDC. Under the high combustion pressure the piston pin deflects such that the middle section bends in direction of TDC. Said deflection causes a high edge pressure on the outer edges of the piston pin bore. Hence, engine manufacturers developed various piston pin bore and piston pin bushing designs to relief the high edge pressure on the outer edges of the piston pin bore.

For example, EP 1 167 737 A2 discloses a connecting rod with a connecting rod eye. The eye has an inner wall that is deformed to deviate at least partially from a cylindrical shape in such a way that the inner wall has a shape matching the outer wall of the piston pin in the load-deformed state. The inner wall of the connecting rod eye is convexly designed in longitudinal section at least in a predetermined area.

An example of a further connecting rod is disclosed in WO 2006/061012 A2. The connecting rod includes a small end with a piston pin bore. The small end includes a piston pin supporting structure with a flattened lower end face that transitions into a shank.

DE 4133586 A1 discloses a connecting rod according to the preamble of claim 1.

The present disclosure is directed, at least in part, to improving or overcoming one or more aspects of prior systems.

### Summary of the Disclosure

According to a first aspect of the present disclosure, a connecting rod for connecting a piston via a piston pin to a crankshaft is disclosed. The connecting rod comprises a shank and a small end. The small end includes a bore for receiving the piston pin. The bore extends through the small end between a first lateral face of the small end and a second lateral face of the small end. The bore further have an inner face with a shank sided section and a piston crown sided section. The inner face at the shank sided section delimits a piston pin supporting structure. The piston pin supporting structure includes at least one recess for providing less material next to the first lateral face and the second lateral face, respectively, in a shank direction than at an azimuthal side position at about 45° relative to the shank direction. The at least one recess is provided in the first lateral face and in the second lateral face. In addition, the at least one recess extends within a range between 45° and +45° relative to an azimuthal position in the shank direction at 0°, particularly, within a range between 25° and +25° relative to the azimuthal position.

According to another aspect of the present disclosure, an internal combustion engine is disclosed. The internal combustion engine comprises at least one cylinder unit. Each cylinder unit includes a piston, a connecting rod as disclosed herein, and a piston pin connecting the piston and the connecting rod.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic drawing of a sectional cut view through a section of an internal combustion engine;
Fig. 2 is a cut view of a small end with recesses of a connecting rod according to one embodiment;
Fig. 3 is a side view of the small end of Fig. 2;
Fig. 4 is a cut view of a small end with reductions of a connecting rod according to another embodiment;
Fig. 5 is a side view of the small end of Fig. 4;
Fig. 6 is a cut view of a small end with reductions of a connecting rod according to yet another embodiment; and
Fig. 7 is a side view of the small end of Fig. 6.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based at least in part on the realization that a small end of a connecting rod may be designed to facilitate an elastic deformation. Specifically, a piston pin support structure at a shank sided section of the piston pin bore may be adapted to provide for elasticity in edge regions of the piston pin bore. Thus, that edge regions of the piston pin bore may elastically deform under the influence of a deflecting piston pin. The elasticity may relieve said edge regions from a high edge pressure which would occur if the edge regions could not elastically deform. To provide elasticity, the piston pin supporting structure is weakened in regions where elasticity is desired. Said weakening is achieved by providing less material in those regions.

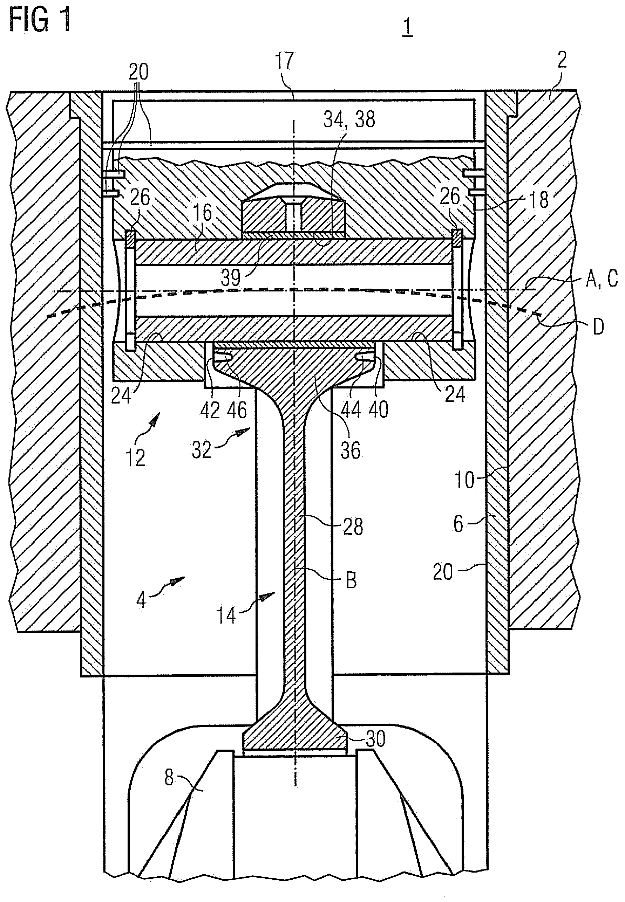

Referring to Fig. 1, a section of an internal combustion engine 1 comprising an engine block 2, a piston assembly 4 arranged in a cylinder liner 6 is depicted. In addition, engine 1 further comprises a crankshaft 8 that is connected to piston assembly 4.

In engine block 2, a plurality of cylinder bores are provided, one of which is shown in Fig. 1 and referred to by reference numeral 10. Cylinder liner 6 is installed in cylinder bore 10.

Piston assembly 4 includes a piston 12, a connecting rod 14, and a piston pin 16 that connects piston 12 to connecting rod 14.

Piston 12 has a piston crown 17 at a top end of piston 12, and facing a cylinder head (not shown in Fig. 1). A piston skirt 18 of piston 12 faces cylinder liner 6, particularly an inner face 20 of cylinder liner 6. At least one piston ring 22 may be provided in respective annular grooves provided in piston skirt 18.

Piston pin 16 is mounted inside piston 12, particularly in piston bosses 24 at a bottom section of piston 12, and extends along a piston pin axis A. To axially secure piston pin 16 in piston bosses 24, for example circlips 26 may be provided in piston bosses 24. For instance, piston pin 16 may be formed as a cylindrical sleeve, and may be composed of a steel alloy.

Connecting rod 14 includes a shank 28 extending along a longitudinal axis B. In addition, a big end 30 and a small end 32 are formed at opposing ends of shank 28.

Big end 30 is connected to a crank pin of crankshaft 8 that is only shown in part in Fig. 1. Said crankshaft 8 is rotatably mounted in engine block 2. In configurations including more than one cylinder, further piston assemblies may be connected to crankshaft 8.

In the shown embodiment of Fig. 1, small end 32 is designed as a step-type small end that has parallel lateral face sections at an upper portion and parallel lateral face sections at an lower portion of small end 32. The upper lateral face sections are connected to the respective lower lateral face sections via a respective radius. Alternatively, small end 32 may be formed in a different design including, but not limited to, a parallel-type small end with parallel lateral faces, a trapeze-type small end with inclined lateral faces, or combinations thereof.

A bore 34 (also referred to as small eye) for receiving a middle section of piston pin 16 extends through small end 32. Specifically, bore 34 extends between a first lateral face 40 of small end 32 and a second lateral face 42 of small end 32 along a bore axis C. First lateral face 40 and second lateral face 42 are formed at opposing sides of small end 32, and face piston bosses 24 of piston 12 in a mounted state.

In bore 34, a bearing 39 is installed for mounting of piston pin 16. For example, bearing 39 may be a needle bearing, or a slide bearing. In some embodiments, no bearing may be provided in bore 34.

In addition, bore 34 includes an inner face 38 that faces bearing 39 and piston pin 16. Further, inner face 38 of bore 34 delimits a piston pin supporting structure 36 at a shank sided section of inner face 38.

As is described in greater detail later on, piston pin supporting structure 36 is provided with less material in specific regions for allowing elastic deformation in that regions under influence of deformation of piston pin 16 caused by interaction with piston 12 during operation (schematically indicated overemphasized in Fig. 1 by a dashed curve D). For example, piston pin supporting structure 36 may comprise recesses 44, 46 as depicted in Fig. 1.

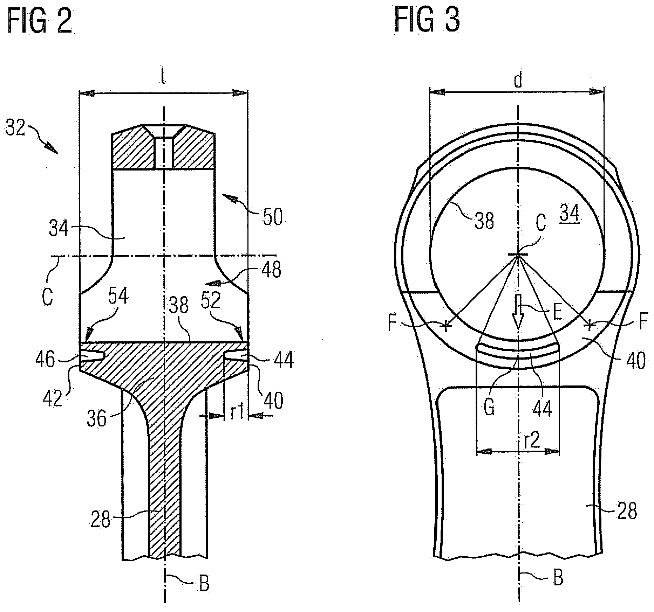

In the following, exemplary embodiments of a connecting rod including a small end with a piston pin supporting structure that is provided with less material in specific regions to facilitate elastic deformation are subsequently described with reference to Figs. 2 and 3, Figs 4 and 5, as well as Figs. 6 and 7.

Referring to Figs. 2 and 3, one embodiment of connecting rod 14 that is provided with recesses 44, 46 in small end 32 is shown in a cut view (see Fig. 2), and in a side view (see Fig. 3).

Inner face 38 of bore 34 includes a shank sided section 48 and a piston crown sided section 50. Shank sided section 48 is that section of inner face 38, which is next to shank 28, whereas piston crown sided section 50 is next to an underside of piston crown 17 (see Fig. 1).

In the shown embodiment of Figs. 2 and 3, first recess 44 and second recess 46 are formed in piston pin supporting structure 36 of small end 32. Particularly, first recess 44 is provided in first lateral face 40, whereas second recess 46 is provided in second lateral face 42.

In some embodiments, more or less recesses may be provided in piston pin supporting structure 36. For example, a series of recesses may be provided next to one another at each lateral face 40, 42.

Both recesses 44, 46 extend into piston pin supporting structure 36 along a recess depth r₁ in a direction perpendicular to longitudinal axis B. For example, depth r1 may be within a range between 5 % and 25 % of a bore length 1 of bore 34 at shank sided section 48. Particularly, depth r1 may be within a range between 10 % and 20 % of bore length 1.

In some embodiments, recesses 44, 46 may taper towards longitudinal axis B along their respective depth r1. For example, recesses 44, 46 may have a parabolic cross section in a common plane of bore axis C and longitudinal axis B as exemplary shown in Fig. 3.

Moreover, recesses 44, 46 have a length r2 in a longitudinal axis of the same. For example, length r2 may be within a range between 5 % and 30 % of a bore diameter b of bore 34, particularly, between 5 % and 15 %. Expressed in alternative terms, recesses 44, 46 may, for example, extend within a range between -45° and +45° relative to an azimuthal position G in a shank direction E at 0°, particularly, within a range between -10° and +10° relative to azimuthal position G.

As can be seen for recess 44 in Fig. 3, recesses 44, 46 have a curved shape viewed in direction of bore axis C. Alternatively, recesses 44, 46 may have any other shape including, but not limited to, a straight shape viewed in direction of bore axis C.

Due to the presence of recesses 44 and 46, piston pin supporting structure 36 provides less material next to first lateral face 40 and second lateral face 42, respectively, in a shank direction E than at an azimuthal side position F viewed in direction of hole axis C. Said azimuthal side position F may be located at 45° relative to shank direction E, or even closer to shank direction E, for example, any degree value within a range between 20° to 45° relative to shank direction E. Shank direction E as used herein refers to that direction, which is directed to shank 28.

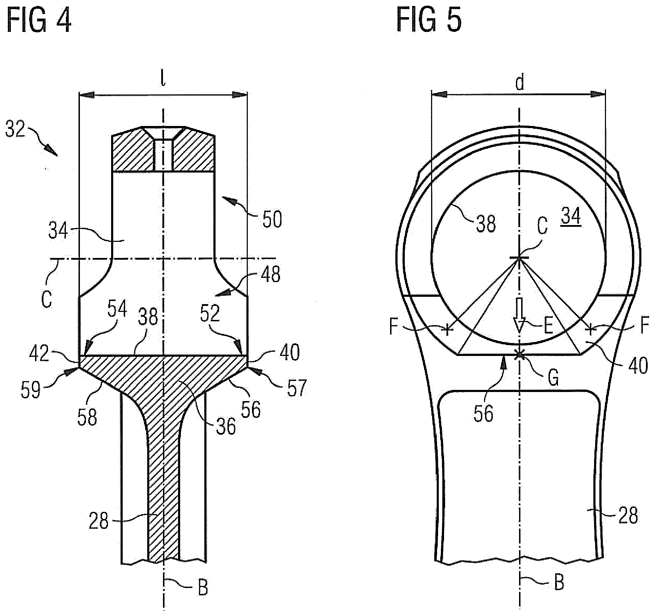

Referring to Figs. 4 and 5, another embodiment of connecting rod 14 that is provided with reductions 56, 58 in small end 32 is shown in a cut view (see Fig. 4), and in a side view (see Fig. 5).

Here, piston pin support structure 36 is formed elastic in a region below edges 52 and 54 of bore 34 at shank sided section 48 due to the presence of reductions 56 and 58. Those reductions 56, 58 are arranged below edges 52 and 54, respectively, in shank direction E.

Specifically, first reduction 56 and second reduction 58 are arranged at a first outer edge 57 and a second outer edge 59 of first lateral face 40 and second lateral face 42, respectively.

In some embodiments, reductions 56, 58 may extend within a range between -45° and +45° relative to azimuthal position G in shank direction E at 0°, particularly within a range between -20° and +20°relative to azimuthal position G.

As exemplary shown for reduction 56 in Fig. 5, reductions 56, 58 have a straight shape viewed in direction of bore axis C in the shown configuration.

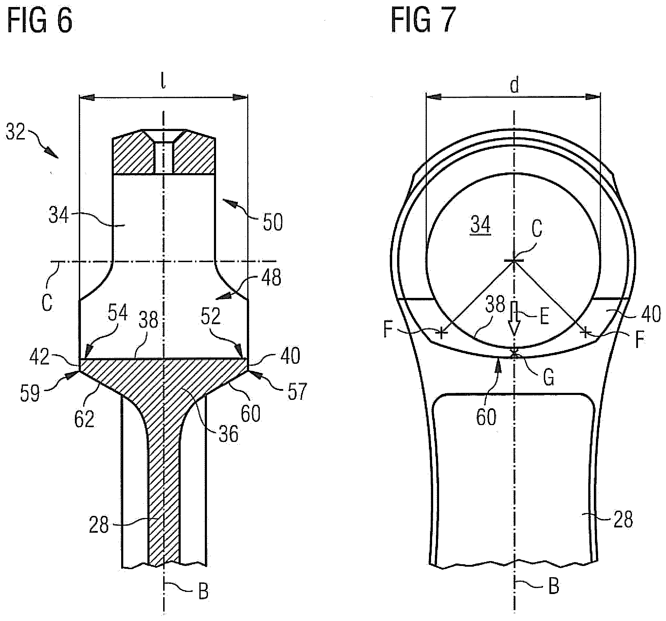

Referring to Figs. 6 and 7, yet another embodiment of connecting rod 14 that is provided with reductions of another type in small end 32 is shown, again, in a cut view (see Fig. 6), and in a side view (see Fig. 7).

Again, reductions 60, 62 are arranged at outer edges 57, 59 of lateral faces 40, 42. Further, said reductions 60 and 62 are arranged below bore edges 52 and 54, respectively, in shank direction E.

In the shown embodiment, reductions 60, 62 have a curved shape viewed in direction of bore axis C as exemplary shown for reduction 60 in Fig. 7. For example, a larger radius than a bore radius of bore 34 having a center displaced against shank direction E from axis C, which is center of the bore radius, may be used to form reduction 60 and/or 62. Reductions of other embodiments may have other shapes. For example, besides the possibility to form reductions in a straight shape as exemplary shown in the embodiment shown in Figs. 5 and 6, the reduction shape may combine straight and curved sections.

Similar to straight reductions 56, 58 (see Figs. 4 and 5), curved reductions 60, 62 may extend within a range between -45° and +45°relative to azimuthal position G in shank direction E at 0°, particularly, within a range between -20° and +20°relative to azimuthal position G.

In some embodiments, recesses and reductions as exemplary disclosed herein may be both formed in one piston pin supporting structure. For example, a curved reduction may be combined with a curved recess at the same lateral face of the small end.

In the various shown embodiments of Figs. 2 to 7, bore 34 has a constant bore diameter, and transitions step-like into first lateral face 40 and into second lateral face 42. Alternatively, bore 34 may at least partially transition chamfered into first lateral face 40, and/or into second lateral face 42.

One skilled in the art will appreciate that the above described embodiments are exemplary only. Providing elasticity in specific regions of a piston pin supporting structure by providing less material may be achieved by additional, and/or alternative measures. For example, piston pin supporting structure may be provided with one or more blind bores to weaken the structure, and, thus, to provide elasticity. As a further example, piston pin supporting structure may be provided with one or more hollows.

Generally, for providing elasticity, piston pin supporting structure 36 provides less material next to first lateral face 40 and second lateral face 42, respectively, in shank direction E than at azimuthal side position F at about 10°, 15°, 20°, 25°, 30°, 35°, 40°, and/or 45° relative to shank direction E.

### Industrial Applicability

The connecting rod as generally disclosed herein is applicable in internal combustion engines including a reciprocating piston assembly. In particular, the connecting rod is applicable in internal combustion engines in which high peak combustion pressure are generated, for example within a range between 100 bar and 300 bar.

During operation of internal combustion engine 1, a high combustion pressure resulting from ignition and combustion of a pressurized air fuel mixture, accelerates piston 12 from TDC to BDC. The peak combustion pressure applies a force acting onto piston 10, and, thus, piston pin 16 that deflects consequently (curve D in Fig. 1). Due to the deflection of piston pin 16, the same pushes against edges 52, 54 of bore 34 of small end 32 during travel to BDC.

In small ends according to conventional designs, the deflecting piston, and, thus, a deflecting piston pin bearing, may either induce a high edge pressure into edges of a piston pin bore of a connecting rod in shank direction. Alternatively, according to other conventional designs, an inner diameter of the piston pin bore may extend from a middle section in both directions to the bore edges such that the piston pin can deflect therein. However, in those configurations, the piston pin is not safely mounted in the piston pin bore, and, thus, the connecting rod may not be guided in a defined and safe manner during operation.

In contrast, small end 32 of connecting rod 14 according to the present disclosure has elastically deformable edges 52, 54 of bore 34, because piston pin supporting structure 36 provides less material below said edges 52, 54, for example, due to the presence of recesses 44, 46 (see Figs. 2 and 3). As a result, outer edges 52, 54 of bore 34 at shank sided section 48 elastically deform in case of a deflection of piston pin 16 during operation. Specifically, edges 52, 54 follow a deflection curve D of piston pin 16 (see Fig. 1). That elastic deformation reduces the edge pressure induced in edges 52, 54. Moreover, also stresses induced into piston pin 16 are reduced. By reducing said edge pressures and stresses, service life of connecting rod and piston pin may be considerably increased. Still further, piston pin 16 may be mounted more safely in bore 34 with constant bore diameter b in comparison to conventional designs with expanding bore diameters as explained above.

As the edge pressure induced in edges 52, 54 may be highest at a transition between bore 34 and lateral faces 40 and 42, piston pin supporting structure 36 may be designed to provide an increasing elasticity towards lateral faces 40, 42. For example, as discussed in connection with Fig. 3, in embodiments with recesses 44 and 46, the same may have a parabolic cross section.

Recesses 44, 46, and reductions 56, 58, 60, 62 may be formed, and/or machined in various manners. For example, those recesses and reductions may be formed during casting of connecting rod 14. Alternatively, said recesses and reductions may be machined after casting of connecting rod 14 by a material removal process such as milling.

As used herein, terms relating to spatial relationships such as parallel and perpendicular, and values and value ranges recited herein may be used in a context allowing for certain tolerances. Those tolerances are determined in that the functional feature associated with the value or relationship may be still fulfilled. That functional feature is mainly providing elasticity below edges 52 and 54 in shank direction E at shank sided section 48 of inner face 38. For example, degree values used herein may not necessarily be interpreted in a strict mathematical sense, but may allow tolerances of up to ±3°, or even more in specific configurations.

Although the preferred embodiments of this invention have been described herein, improvements and modifications may be incorporated without departing from the scope of the following claims.

## Claims

1. A connecting rod (14) for connecting a piston (12) via a piston pin (16) to a crankshaft (8), the connecting rod (14) comprising:
a shank (28); and
a small end (32) including a bore (34) for receiving the piston pin (16), the bore (34) extending through the small end (32) between a first lateral face (40) of the small end (32) and a second lateral face (42) of the small end (32), the bore (34) further having an inner face (38) with a shank sided section (48) and a piston crown sided section (50),
wherein the inner face (38) at the shank sided section (48) delimits a piston pin supporting structure (36) including at least one recess (44, 46) in the first lateral face (40) and in the second lateral face (42) in a direction (E) toward the shank for providing less material next to the first lateral face (40) and the second lateral face (42), respectively,
**characterised in that** the at least one recess (44, 46) provides less material in the shank direction (E) than at an azimuthal side position (F) at about 45° relative to the shank direction (E), the at least one recess (44, 46) extending within a range between -45° and +45° relative to an azimuthal position (G) in the shank direction (E) at 0°, particularly, within a range between -25° and +25° relative to the azimuthal position (G).

2. The connecting rod (14) of claim 1, wherein
the at least one recess (44, 46) has a curved shaped, and/or a straight shape viewed in direction of a bore axis (C) of the bore (34); and/or
the at least one recesses (44, 46) tapers towards a central longitudinal axis (B) of connecting rod (14).

3. The connecting rod (14) of claim 1 or 2, wherein the bore (34) has a bore length (1), and the at least one recess (44, 46) has a depth (r1) within a range between 5 % and 25 % of the bore length (1).

4. The connecting rod (14) of any one of claims 1 to 3, wherein the bore (34) has a bore diameter (d), and the at least one recess (44, 46) has a length (r2) in a longitudinal direction within a range between 5 % and 25 % of the bore diameter (d).

5. The connecting rod (14) of any one of claims 1 to 4, wherein the piston pin supporting structure (36) provides less material next to the first lateral face (40) and the second lateral face (42), respectively, in the shank direction (E) such that outer edges (52, 54) of the bore (34) at the shank sided section (48) elastically deform to follow a deflecting curve (D) of the piston pin (16) during operation.

6. The connecting rod (14) of any one of claims 1 to 5, wherein the piston pin supporting structure (36) includes at least one reduction (56, 58, 60, 62) at an outer edge (57) of the first lateral face (40) at the shank sided section (48), and/or at an outer edge (59) of the second lateral face (42) at the shank sided section (48).

7. The connecting rod (14) of claim 6, wherein the at least one reduction (56, 58, 60, 62) has a curved shape and/or a straight shape viewed in direction of a bore axis (C) of the bore (34).

8. The connecting rod (14) of claim 6 or claim 7, wherein the at least one reduction (56, 58, 60, 62) extends within a range between -45° and +45° relative to an azimuthal position (G) in the shank direction (E) at 0°, particularly, within a range between -20° and +20° relative to the azimuthal position (G) in the shank direction (E).

9. The connecting rod (14) of any one of the preceding claims, wherein the bore (34) has a constant bore diameter (d).

10. The connecting rod (14) of any one of the preceding claims, wherein the bore (34) transitions at least partially chamfered, and/or step-like into the first lateral face (40) and into the second lateral face (42), respectively, at the shank sided section (48).

11. The connecting rod (14) of any one of the preceding claims, wherein the small end (32) is formed as parallel-type small end, a trapeze-type small end, and/or step-type small end.

12. An internal combustion engine (1) comprising at least one cylinder unit, each cylinder unit including:
a piston (12);
a connecting rod (14) according to any one of claims 1 to 1 11; and
a piston pin (16) connecting the piston (12) and the connecting rod (14).

## Patentansprüche

1. Pleuelstange (14) zum Verbinden eines Kolbens (12) über einen Kolbenbolzen (16) mit einer Kurbelwelle (8), wobei die Pleuelstange (14) Folgendes umfasst:
einen Schaft (28); und
ein kleines Ende (32) einschließlich einer Bohrung (34) zum Aufnehmen des Kolbenbolzens (16), wobei die Bohrung (34) durch das kleine Ende (32) zwischen einer ersten Seitenfläche (40) des kleinen Endes (32) und einer zweiten Seitenfläche (42) des kleinen Endes (32) verläuft, wobei die Bohrung (34) ferner eine Innenfläche (38) mit einem schaftseitigen Abschnitt (48) und einem kolbenbodenseitigen Abschnitt (50) aufweist,
wobei die Innenfläche (38) am schaftseitigen Abschnitt (48) eine Kolbenbolzenstützstruktur (36) einschließlich mindestens einer Aussparung (44, 46) in der ersten Seitenfläche (40) und in der zweiten Seitenfläche (42) in einer Richtung (E) zum Schaft hin begrenzt, um weniger Material neben der ersten Seitenfläche (40) bzw. der zweiten Seitenfläche (42) bereitzustellen,
**dadurch gekennzeichnet, dass** die mindestens eine Aussparung (44, 46) weniger Material in der Schaftrichtung (E) als bei einer azimutalen Seitenposition (F) bei etwa 45° relativ zur Schaftrichtung (E) bereitstellt,
wobei die mindestens eine Aussparung (44, 46) in einem Bereich zwischen -45° und +45° relativ zu einer azimutalen Position (G) in der Schaftrichtung (E) bei 0°, insbesondere in einem Bereich zwischen -25° und +25° relativ zur azimutalen Position (G), verläuft.

2. Pleuelstange (14) nach Anspruch 1, wobei
die mindestens eine Aussparung (44, 46) eine in Richtung einer Bohrungsachse (C) der Bohrung (34) gesehen gekrümmte Form und/oder gerade Form aufweist; und/oder
sich die mindestens eine Aussparung (44, 46) zu einer zentralen Längsachse (B) der Pleuelstange (14) hin verjüngt.

3. Pleuelstange (14) nach Anspruch 1 oder 2, wobei die Bohrung (34) eine Bohrungslänge (I) aufweist, und die mindestens eine Aussparung (44, 46) eine Tiefe (r1) in einem Bereich zwischen 5 % und 25 % der Bohrungslänge (I) aufweist.

4. Pleuelstange (14) nach einem der Ansprüche 1 oder 3, wobei die Bohrung (34) einen Bohrungsdurchmesser (d) aufweist, und die mindestens eine Aussparung (44, 46) eine Länge (r2) in einer Längsrichtung in einem Bereich zwischen 5 % und 25 % des Bohrungsdurchmessers (d) aufweist.

5. Pleuelstange (14) nach einem der Ansprüche 1 bis 4, wobei die Kolbenbolzenstützstruktur (36) weniger Material neben der ersten Seitenfläche (40) bzw. der zweiten Seitenfläche (42) in der Schaftrichtung (E) bereitstellt, sodass sich die Außenkanten (52, 54) der Bohrung (34) am schaftseitigen Abschnitt (48) elastisch verformen, um während des Betriebs einer Umlenkkurve (D) des Kolbenbolzens (16) zu folgen.

6. Pleuelstange (14) nach einem der Ansprüche 1 bis 5, wobei die Kolbenbolzenstützstruktur (36) mindestens eine Reduktion (56, 58, 60, 62) an einer Außenkante (57) der ersten Seitenfläche (40) am schaftseitigen Abschnitt (48) und/oder an einer Außenkante (59) der zweiten Seitenfläche (42) am schaftseitigen Abschnitt (48) einschließt.

7. Pleuelstange (14) nach Anspruch 6, wobei die mindestens eine Reduktion (56, 58, 60, 62) eine in Richtung einer Bohrungsachse (C) der Bohrung (34) gesehen gekrümmte Form und/oder gerade Form aufweist.

8. Pleuelstange (14) nach Anspruch 6 oder 7, wobei die mindestens eine Reduktion (56, 58, 60, 62) in einem Bereich zwischen -45° und +45° relativ zu einer azimutalen Position (G) in der Schaftrichtung (E) bei 0°, insbesondere in einem Bereich zwischen -20° und +20° relativ zur azimutalen Position (G) in der Schaftrichtung (E), verläuft.

9. Pleuelstange (14) nach einem der vorhergehenden Ansprüche, wobei die Bohrung (34) einen konstanten Bohrungsdurchmesser (d) aufweist.

10. Pleuelstange (14) nach einem der vorhergehenden Ansprüche, wobei die Bohrung (34) mindestens teilweise abgeschrägt und/oder stufenartig in die erste Seitenfläche (40) bzw. in die zweite Seitenfläche (42) am schaftseitigen Abschnitt (48) übergeht.

11. Pleuelstange (14) nach einem der vorhergehenden Ansprüche, wobei das kleine Ende (32) als ein kleines Ende vom parallelen Typ, ein kleines Ende vom Trapeztyp und/oder ein kleines Ende vom Stufentyp ausgebildet ist.

12. Verbrennungsmotor (1), umfassend mindestens eine Zylindereinheit, wobei jede Zylindereinheit Folgendes einschließt:
ein Kolben (12);
eine Pleuelstange (14) nach einem der Ansprüche 1 bis 11; und
einen Kolbenbolzen (16), der den Kolben (12) und die Pleuelstange (14) verbindet.

## Revendications

1. Bielle (14) pour relier un piston (12) par l'intermédiaire d'une goupille de piston (16) à un vilebrequin (8), la bielle (14) comprenant :
une tige (28) ; et
une petite extrémité (32) comportant un alésage (34) pour la réception de la goupille de piston (16), l'alésage (34) s'étendant à travers la petite extrémité (32) entre une première face latérale (40) de la petite extrémité (32) et une deuxième face latérale (42) de la petite extrémité (32), l'alésage (34) ayant en outre une face interne (38) avec une section coté tige (48) et une section côté couronne de piston (50),
dans laquelle la face interne (38) au niveau de la section côté tige (48) délimite une structure de support de goupille de piston (36) comprenant au moins un évidement (44, 46) dans la première face latérale (40) et dans la deuxième face latérale (42) dans une direction (E) dirigée vers la tige afin de fournir moins de matériau à côté de la première face latérale (40) et de la deuxième face latérale (42), respectivement,
**caractérisée en ce que** le au moins un évidement (44, 46) fournit moins de matériau dans la direction de la tige (E) qu'au niveau d'une position latérale azimutale (F) à environ 45° par rapport à la direction de tige (E),
le au moins un évidement (44, 46) s'étendant dans une plage comprise entre -45° et +45° par rapport à une position azimutale (G) dans la direction de tige (E) à 0°, en particulier dans une plage comprise entre -25° et +25° par rapport à la position azimutale (G).

2. Bielle (14) selon la revendication 1 dans laquelle :
le au moins un évidement (44, 46) a une forme incurvée et/ou une forme droite vue dans la direction d'un axe d'alésage (C) de l'alésage (34) ; et/ou
le au moins un évidement (44, 46) s'effile vers un axe longitudinal central (B) de la bielle (14).

3. Bielle (14) selon la revendication 1 ou 2, dans laquelle l'alésage (34) a une longueur d'alésage (l) et le au moins un évidement (44, 46) a une profondeur (rl) dans une plage entre 5 % et 25 % de la longueur d'alésage (l).

4. Bielle (14) selon l'une quelconque des revendications 1 à 3, dans laquelle l'alésage (34) a un diamètre d'alésage (d) et le au moins un évidement (44, 46) a une longueur (r2) dans une direction longitudinale dans une plage entre 5 % et 25 % du diamètre d'alésage (d).

5. Bielle (14) selon l'une quelconque des revendications 1 à 4, dans laquelle la structure de support de goupille de piston (36) fournit moins de matériau à proximité de la première face latérale (40) et de la deuxième face latérale (42), respectivement, dans la direction de tige (E) de sorte que des bords externes (52, 54) de l'alésage (34) au niveau de la section côté tige (48) se déforment élastiquement pour suivre une courbe de déviation (D) de la goupille de piston (16) pendant le fonctionnement.

6. Bielle (14) selon l'une quelconque des revendications 1 à 5, dans laquelle la structure de support de goupille de piston (36) comprend au moins une réduction (56, 58, 60, 62) au niveau d'un bord externe (57) de la première face latérale (40) au niveau de la section côté tige (48) et/ou au niveau d'un bord externe (59) de la deuxième face latérale (42) au niveau de la section côté tige (48).

7. Bielle (14) selon la revendication 6, dans laquelle la au moins une réduction (56, 58, 60, 62) a une forme incurvée et/ou une forme droite vue dans la direction d'un axe d'alésage (C) de l'alésage (34).

8. Bielle (14) selon la revendication 6 ou la revendication 7, dans laquelle la au moins une réduction (56, 58, 60, 62) s'étend dans une plage comprise entre -45° et +45° par rapport à une position azimutale (G) dans la direction de tige (E) à 0°, en particulier dans une plage comprise entre -20° et +20° par rapport à la position azimutale (G) dans la direction de tige (E).

9. Bielle (14) selon l'une quelconque des revendications précédentes, dans laquelle l'alésage (34) a un diamètre d'alésage constant (d).

10. Bielle (14) selon l'une quelconque des revendications précédentes, dans laquelle l'alésage (34) effectue une transition au moins partiellement chanfreinée et/ou pas à pas dans la première face latérale (40) et dans la deuxième face latérale (42), respectivement, au niveau de la section côté tige (48).

11. Bielle (14) selon l'une quelconque des revendications précédentes, dans laquelle la petite extrémité (32) est formée comme une petite extrémité de type parallèle, une petite extrémité de type trapèze et/ou une petite extrémité de type pas.

12. Moteur à combustion interne (1) comprenant au moins une unité de cylindre, chaque cylindre comportant :
un piston (12) ;
une bielle (14) selon l'une quelconque des revendications 1 à 1 11 ; et
une goupille de piston (16) reliant le piston (12) et la bielle (14).
